# EUROPÄISCHE PATENTANMELDUNG

(11) **EP 1 072 562 A2**
(43) Veröffentlichungstag der Anmeldung: **31.01.2001**
(21) Anmeldenummer: 00115323.8
(22) Anmeldetag: 14.07.2000
(51) Int. Cl.: C03B 7/086, C03B 7/092

(54) **Verfahren und Vorrichtung zur Regelung der Ausflussmenge von flüssigem Glas bei einem Fliessfeeder**

(30) Priorität: 29.07.1999 DE 19935838
(71) Anmelder: W. Lindner Maschinen GmbH, 94481 Grafenau-Reismühle (DE)
(72) Erfinder: Lindner, Walter, 94481 Grafenau-Reismühle (DE)
(74) Vertreter: Manitz, Finsterwald & Partner

(57) **Zusammenfassung**

Es werden ein Verfahren und eine Vorrichtung zur Regelung der Ausflußmenge von flüssigem Glas bei einem Fließfeeder beschrieben, wobei der Auslaßkanal zumindest auf einem Teilbereich seiner Höhe sich zur Auslaßöffnung hin konisch verjüngend ausgebildet und der in diesem Bereich angeordnete, sich drehende Plunger hinsichtlich seines Arbeitsbereichs höhenverstellbar ausgebildet ist.

## Beschreibung

Die Erfindung betrifft ein Verfahren sowie eine Vorrichtung zur Regelung der Ausflußmenge von flüssigem Glas bei einem Fließfeeder mit vertikalem Auslaßkanal und einem in diesem Auslaßkanal angeordneten, insbesondere zur Ausführung von Dreh- und/ oder Hubbewegungen geeigneten Plunger.

Für einen sogenannten Fließfeeder ist typisch, daß das flüssige Glas zunächst im wesentlichen horizontal über einen Kanal oder ein Rohr einem Auslaßkanal zugeführt und in diesem Auslaßkanal dann senkrecht mit im wesentlichen konstanter Geschwindigkeit frei nach unten ausfließt. Die Ausfließgeschwindigkeit kann dabei durch Beeinflussung der Glastemperatur und die dadurch bedingte Veränderung der Glasviskosität und/oder durch Auslaufdüsen unterschiedlicher Querschnitte eingestellt und geregelt werden.

Zur Verbesserung dieses Grundprinzips eines Fließfeeders ist es bekannt, in dem vertikalen Auslaßkanal einen Plunger vorzusehen, der mit einem Antrieb zur Realisierung von Vertikalhubbewegungen verbunden ist.

Bei im vertikalen Auslaßkanal stillstehendem Plunger fließt das flüssige Glas am Plunger entlang mit konstanter Geschwindigkeit nach unten.

Wird der Plunger mittels der Hubeinrichtung mit vorgebbarer Geschwindigkeit nach oben bewegt, so wird dadurch die Ausflußgeschwindigkeit des Glases aus der Auslaßöffnung bzw. Düse verringert und kann bei entsprechender Vorgabe des Plungerhubs zu Null werden oder es kann sogar erreicht werden, daß das Glas wieder nach oben in die Auslaufdüse zurückgesaugt wird.

Wird der Plunger zur Realisierung eines üblicherweise relativ schnell ablaufenden Ausstoßhubs nach unten bewegt, so wird dabei eine größere Menge an flüssigem Glas aus der Auslaßöffnung bzw. Düse ausfließen als dies bei stillstehendem Plunger der Fall ist.

Soll bei einem derartigen Fließfeeder mit einem durch einen Hubantrieb betätigten Plunger die Ausflußmenge, d.h. das Produkt aus Tropfengewicht und Anzahl der Tropfen pro Zeiteinheit, verändert werden, dann ist dies nur durch eine Änderung der Glasviskosität und/oder des Auslaufdüsenquerschnittes möglich, aber dabei sind die erzielbaren Änderungen zum einen begrenzt und zum anderen ist die Flexibilität der Verstellmöglichkeiten unbefriedigend.

Aufgabe der vorliegenden Erfindung ist es, einen Fließfeeder der eingangs angeführten Art so auszugestalten und zu betreiben, daß die Ausflußmenge unabhängig von der jeweiligen Glasviskosität mit hoher Genauigkeit veränderbar vorgegeben und geregelt werden kann, wobei der dazu zu treffende technische Aufwand möglichst gering sein soll.

Gelöst wird diese Aufgabe nach der Erfindung im wesentlichen dadurch, daß der ringförmige Durchlaßspalt zwischen der Innenwandung des Auslaßkanals und dem Plunger in Abhängigkeit von der jeweils geforderten Ausflußmenge veränderbar ist. Bevorzugt wird dies dadurch realisiert, daß die unterhalb des Zuführkanals gelegene Innenwandung des Auslaßkanals des Fließfeeders zumindest auf einem Teilbereich ihrer Höhe sich zur Auslaßöffnung bzw. zur Düse hin konisch verjüngend ausgebildet und der Plunger in diesem konischen Bereich in seiner Arbeitshöhe verstellbar ist.

In Abhängigkeit von der jeweils geforderten Ausflußmenge wird gemäß der bevorzugten Ausführungsform der Erfindung der vertikale Arbeitspunkt des Plungers verändert, d.h. der Plunger arbeitet in unterschiedlichen Höhenlagen, wobei dem jeweiligen Arbeitspunkt, von dem ausgehend der Plunger seine Aufwärts- und Abwärtsbewegungen ausführt, jeweils ein unterschiedlich großer, den Durchtritt des flüssigen Glases ermöglichender Ringspalt zugeordnet ist.

Besonders vorteilhaft wirkt sich im Zusammenhang mit dem erfindungsgemäßen Grundprinzip aus, daß der Ringspalt zwischen Plunger und konischer Wandung in die Durchflußberechnung mit ungefähr der dritten Potenz eingeht, d.h. sehr geringe Spaltweitenänderungen wirken sich bereits ausgeprägt aus. Dies hat wiederum zur Folge, daß die Konizität des konischen Bereichs sehr gering gehalten werden kann.

Unabhängig von den Hubbewegungen des Plungers wird dieser Plunger bevorzugt permanent in Drehung versetzt, so daß durch diese permanente Drehung thermische Inhomogenitäten im System verhindert werden und eine äußerst intensive Durchmischung des Glases im Ringspalt zwischen Plunger und konischer Wandung erzielt wird, was wiederum zur Folge hat, daß aufgrund der dabei erzielten Homogenisierung des Glases eine Qualitätsverbesserung des Glases sowie ein ausgeprägt gleichmäßiger Glasfluß über den gesamten Querschnitt erzielt und damit die Genauigkeit des Tropfengewichts erhöht wird.

Besonders vorteilhaft läßt sich die Erfindung im Zusammenhang mit kleineren Systemen realisieren, da in diesem Falle sowohl der Plunger als auch der konische Bereich aus Platinblech, d.h. aus reinem Platin oder einer Platinlegierung gefertigt werden können.

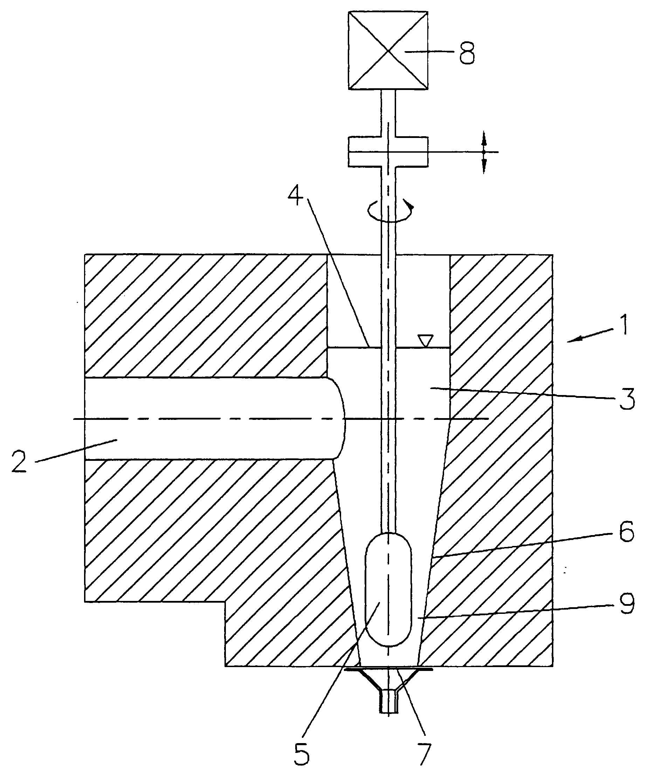

Weitere vorteilhafte Ausgestaltungen der Erfindung ergeben sich aus den Unteransprüchen sowie der nachfolgenden Beschreibung eines Ausführungsbeispiels unter Bezugnahme auf die Zeichnung; die einzige Figur der Zeichnung zeigt eine schematische Querschnittsansicht eines Fließfeeders.

Der mit dem allgemeinen Bezugszeichen 1 gekennzeichnete Fließfeeder umfaßt einen im wesentlichen horizontal verlaufenden Zuführkanal 2 für flüssiges Glas, der in einen vertikal verlaufenden Auslaßkanal 3 mündet. Das Niveau des flüssigen Glases im Auslaßkanal 3 ist mit dem Bezugszeichen 4 gekennzeichnet, es liegt oberhalb des Zuführkanals 2.

Der Auslaßkanal 3 ist bevorzugt etwa ab Höhe Zuführkanal zum Auslaß 7 bzw. zur Auslaßdüse hin konisch ausgebildet, und in diesem konischen Bereich 6 ist ein Plunger 5 angeordnet, der mit einem Dreh-Hub-Antrieb 8 verbunden ist. Zwischen dem Plunger 5 und der konischen Wandung entsteht aufgrund dieser Ausgestaltung ein Ringspalt, dessen Breite sich in Abhängigkeit von der Höheneinstellung des Plungers 5 ändert.

Der Plunger 5 ist im Regelfall im wesentlichen zylindrisch ausgebildet und kann an seiner Außenfläche mit einem Fördergewinde versehen sein. Mittels des Plungerantriebs 8 wird der Plunger 5 im Betrieb zum einen in Drehung versetzt und führt zum anderen über eine vorgebbare Hubhöhe Hubbewegungen aus, die bei optimaler Einstellung dazu führen, daß in den aufeinanderfolgenden Ausstoßhüben definierte Glasmengen, d.h. Glasmengen mit einem vorgebbaren Tropfengewicht über die Auslaßöffnung oder Düse 7 abgegeben werden. Eine Veränderung der Ausflußmenge, d.h. des Produkts aus Tropfengewicht und Anzahl der Tropfen pro Zeiteinheit, wird gemäß der Erfindung dadurch erreicht, daß der Arbeitspunkt des Plungers 5 verlagert wird, d.h. im Falle einer Erhöhung der Ausflußmenge erfolgen die Hubbewegungen des Plungers dann in einem Bereich, in dem der Spalt 9 zwischen Plunger und konischer Wandung 6 größer ist.

Um diese Ringspalterweiterung wirksam nutzen zu können, ist es lediglich erforderlich, eine vergleichsweise geringe Konizität von wenigen Graden vorzusehen, da der Spalt zwischen Plunger und konischer Wandung in die Durchflußberechnung etwa mit der dritten Potenz eingeht und daher schon sehr geringe Spaltweitenveränderungen durch vertikale Verlagerung des Plunger-Arbeitsbereichs sehr wirksam hinsichtlich der Regelung der Ausflußmenge sind.

Im Zusammenhang mit der jeweiligen Vorgabe des Arbeitsbereichs des Plungers 5 innerhalb des konischen Bereichs 6 kann auch die Hubhöhe, die Hubgeschwindigkeit und/oder die Drehzahl des Plungers verändert werden, um jeweils die optimale Funktion in Abhängigkeit von der gestellten Aufgabe zu gewährleisten.

## Patentansprüche

1. Verfahren zur Regelung der Ausflußmenge von flüssigem Glas bei einem Fließfeeder mit vertikalem Auslaßkanal und einem in diesem Auslaßkanal angeordneten, insbesondere zur Ausführung von Dreh- und/oder Hubbewegungen geeigneten Plunger,
dadurch **gekennzeichnet,**
daß der ringförmige Durchlaßspalt zwischen der Innenwandung des Auslaßkanals und dem Plunger in Abhängigkeit von der jeweils geforderten Ausflußmenge veränderbar ist.

2. Verfahren nach Anspruch 1,
dadurch **gekennzeichnet,**
daß der Plunger permanent in Drehung versetzt wird.

3. Vorrichtung zur Durchführung des Verfahrens nach Anspruch 1 oder 2 mit zumindest einem im wesentlichen horizontal verlaufenden und in einen vertikalen Auslaßkanal (3) mündenden Zuführkanal (2) und einem im vertikalen Auslaßkanal (3) angeordneten Plunger (5), der mit einem Dreh- und/oder Hubantrieb (8) verbunden ist,
dadurch **gekennzeichnet,**
daß die unterhalb des Zuführkanals (2) gelegene Innenwandung (6) des Auslaßkanals (3) zumindest auf einem Teilbereich ihrer Höhe sich zur Auslaßöffnung (7) hin konisch verjüngend ausgebildet und der Plunger (5) in diesem konischen Bereich (6) in seiner Arbeitshöhe verstellbar ist.

4. Vorrichtung nach Anspruch 3,
dadurch **gekennzeichnet,**
daß der Plunger (5) mit einem Außengewinde versehen ist.

5. Vorrichtung nach Anspruch 3 oder 4,
dadurch **gekennzeichnet,**
daß der zwischen einer Mantellinie der konischen Innenwandung (6) des Auslaßkanals (3) und der Vertikalen gemessene Wandneigungswinkel insbesondere im Bereich von etwa 1° bis 10° gelegen ist.

6. Vorrichtung nach einem der Ansprüche 3 bis 5,
dadurch **gekennzeichnet,**
daß der Plunger (5) und/oder ein zumindest den konischen Bereich (6) bildendes Rohr aus Platinblech gefertigt sind.

7. Vorrichtung nach einem der Ansprüche 3 bis 5,
dadurch **gekennzeichnet,**
daß der Plunger (5) und/oder zumindest der vertikale Auslaßkanal (3) und damit der konische Bereich (6) aus keramischem Material bestehen und der Plunger (5) sowie zumindest der konische Bereich (6) vorzugsweise platinbeschichtet sind

8. Vorrichtung nach einem der Ansprüche 3 bis 7,
dadurch **gekennzeichnet,**
daß der Dreh- und Hubantrieb (8) zur Einstellung der Arbeitshöhe des Plungers (5) im konischen Bereich (6) zusammen mit dem Plunger (5) als Einheit verstellbar ist.
